# FASCICULE DE BREVET EUROPEEN

(11) **EP 1 928 671 B1**
(45) Date de publication et mention de la délivrance du brevet: **13.03.2019**
(21) Numéro de dépôt: 06808068.8
(22) Date de dépôt: 05.09.2006
(51) Int. Cl.: G09F 3/10

(54) **SYSTEME DE MARQUAGE DE SECURITE**
SICHERHEITSMARKIERUNGSSYSTEM
SECURITY MARKING SYSTEM

(30) Priorité: 29.09.2005 FR 0509940
(43) Date de publication de la demande: 11.06.2008
(73) Titulaire: SURYS, 77607 Marne la Vallee Cedex 3 (FR)
(72) Inventeur: SOUPARIS, Hugues, 94130 Nogent Sur Marne (FR)
(74) Mandataire: Bouvier, Thibault
(86) Numéro de dépôt international: PCT/FR2006/002040
(87) Numéro de publication internationale: WO 2007/036617

(56) Documents cités:
- WO-A-2004/008240
- WO-A-2005/027078
- GB-A- 2 254 045
- US-A- 5 259 906
- US-A- 5 435 600
- US-A- 6 019 395
- US-A1- 2004 091 658
- US-A1- 2005 089 663

## Description

La présente invention concerne un système de marquage de sécurité pour la réalisation d'une étiquette de sécurité, et plus particulièrement un tel système comprenant une feuille support telle qu'une feuille siliconée présentant deux volets séparés sur une première ligne de pliage, le premier volet supportant sur la face recto un premier composant holographique dont la face en contact avec la feuille support est revêtue d'une couche adhésive.

On connaît déjà des étiquettes constituées de deux composants de dimensions différentes superposés scellant entre eux une information de personnalisation, le premier composant (le plus grand) étant un composant holographique métallisé destructible en cas de tentative d'arrachement. Le deuxième composant (plus petit) est un composant transparent également destructible qui supporte le marquage permettant la personnalisation de l'étiquette.

Plus particulièrement, le document FR-A-2757984 décrit un système de marquage de sécurité pour la réalisation d'une étiquette de marquage sécurisée, comprenant une feuille support telle qu'une feuille siliconée présentant deux volets séparés par une ligne de pliage. Le premier volet supporte sur la face recto un premier composant holographique dont la face en contact avec la feuille support est revêtue d'une couche adhésive, et le deuxième volet supporte sur la face verso un deuxième composant formé par un film dont la face en contact avec la feuille support est revêtue d'une couche adhésive et dont la face opposée porte des inscriptions de personnalisation. Une découpe dans la feuille de support permet de coller le premier élément sur le deuxième élément de manière à sceller le marquage de signalisation.

Bien que donnant généralement satisfaction, ce système présente un certain nombre d'inconvénients.

En premier lieu, les deux composants ne se trouvent pas sur la même face de la feuille de support. Il s'en suit des difficultés d'apposition de ces composants sur la feuille. En particulier, se pose un problème de repérage d'une étiquette d'une face sur l'autre. Il est en outre nécessaire de découper la fenêtre dans la feuille de support.

Par ailleurs, le processus de production est relativement complexe. Il en résulte des coûts de production de ces étiquettes assez élevés.

Enfin, l'ergonomie de ce système n'est pas optimale, dans la mesure où les deux composants ne sont pas visibles simultanément.

L'état de l'art comprend également les documents US6019395, WO2004/008240, WO2005/027078 et US5435600.

La présente invention vise à pallier ces inconvénients.

Plus particulièrement, l'invention a pour but de fournir un système de marquage de sécurité à deux composants, dans lequel les deux composants sont de même nature, et supportés par la même face de la feuille de support.

A cet effet, l'invention a tout d'abord pour objet un système de marquage de sécurité selon la revendication 1 pour la réalisation d'une étiquette de marquage sécurisée, comprenant une feuille support telle qu'une feuille siliconée présentant deux volets séparés sur une première ligne de pliage, le premier volet supportant sur la face recto un premier composant holographique dont la face en contact avec la feuille support est revêtue d'une couche adhésive, et dans lequel :
- le deuxième volet supporte sur la même face recto un deuxième composant formé par un film dont la face en contact avec la feuille support est revêtue d'une couche adhésive et dont la face opposée porte des inscriptions de personnalisation,
- le premier volet comporte une deuxième ligne de pliage sensiblement parallèle à la première ligne de pliage.

On verra ci-après que les deux lignes de pliage permettent un pliage en zigzag de la feuille de support, de sorte que le premier composant peut être transféré sur le deuxième bien que ces deux composants soient apposés sur la même face de la feuille de support.

Le deuxième volet comporte un deuxième composant holographique.

L'un au moins parmi le premier composant holographique et le deuxième composant holographique est au moins partiellement démétallisé.

Egalement dans un mode de réalisation particulier, le premier composant est de dimensions supérieures à celles du deuxième composant.

L'invention a également pour objet un procédé de fabrication selon la revendication 4 d'un système de marquage de sécurité tel que décrit ci-dessus, dans lequel les deux composants sont obtenus par traitement d'un même film.

Dans un mode de mise en oeuvre particulier, le traitement d'au moins une partie dudit film destinée à former l'un au moins desdits composants comprend les étapes consistant à :
- estamper une couche thermoformable pour former une surface holographique ;
- métalliser au moins une partie de ladite surface holographique ; et
- revêtir la surface estampée et métallisée d'une couche adhésive.

Plus particulièrement, ce procédé comprend en outre une étape de démétallisation partielle de ladite partie métallisée.

Chacune de ces étapes est connue en elle-même dans le domaine de la réalisation des systèmes de marquage de sécurité. Toutefois, dans le procédé selon l'invention, les deux composants restent dans une même position relative pendant ces étapes, et subissent en même temps les mêmes étapes de traitement sur la même face du film. Ces deux composants sont donc obtenus par des manipulations d'ensemble à partir d'un même film holographique. La fabrication du système de marquage en est simplifiée de façon correspondante.

Par ailleurs, la démétallisation d'un des composants le rend sensiblement transparent. Il est ainsi possible de faire apparaître des informations dont la lecture se fait d'un côté ou de l'autre côté lorsque l'étiquette de sécurité est ensuite collée sur une surface transparente telle qu'un pare-brise de voiture.

Les étapes ci-dessus sont suivies de façon connue des étapes de découpe et d'échenillage du film adhésivé sur un support de type papier siliconé ou autre.

L'invention a également pour objet un procédé de marquage de sécurité selon la revendication 7, mettant en oeuvre une étiquette de marquage sécurisée réalisée à partir d'un système de marquage de sécurité tel que décrit ci-dessus.

Dans un mode de mise en oeuvre particulier, ce procédé comprend les étapes consistant à décoller partiellement le premier composant de la feuille de support au moins entre les deux lignes de pliage, à plier la feuille de support en zigzag, à coller sur le deuxième composant la partie décollée du premier composant, à achever de décoller le premier composant de la feuille de support, à achever de coller le premier composant sur le deuxième composant et à retirer la feuille de support de manière à obtenir ladite étiquette de marquage sécurisée, et à coller ladite étiquette sur un objet à marquer de façon sécurisée.

On décrira maintenant, à titre d'exemple non limitatif, un mode de réalisation particulier de l'invention, en référence aux dessins schématiques annexés dans lesquels :

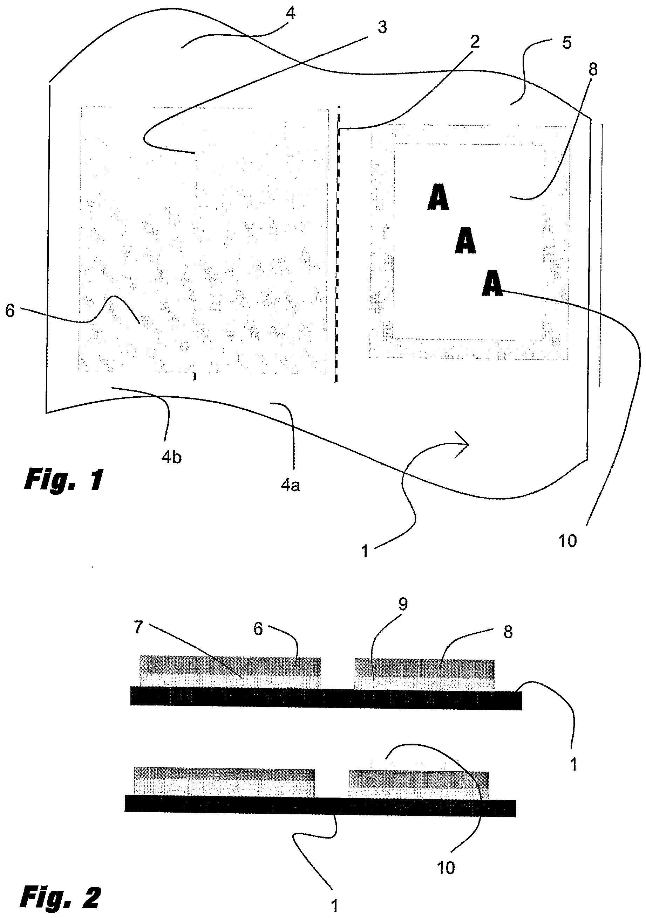

- la figure 1 est une vue de dessus d'un système selon l'invention ;
- la figure 2 est une vue en coupe de ce système dans lequel l'épaisseur des couches a été très agrandie pour une meilleure compréhension ; et

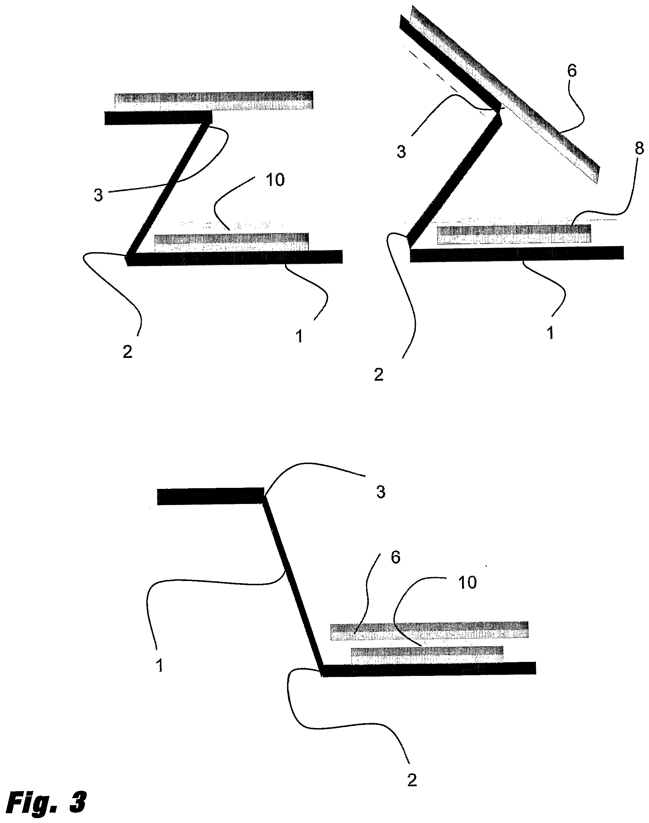

- la figure 3 illustre la mise en oeuvre du procédé mettant en oeuvre ce système.

On voit aux figures une feuille de support siliconée 1 en forme de bande comportant deux lignes de pliage longitudinales 2 et 3. La ligne 2 divise la feuille 1 en deux volets 4 et 5, et la ligne 3 divise le volet 4 en deux sous-volets 4a et 4b.

Un composant holographique 6, destructible en cas de tentative d'arrachement, est collé sur le volet 4 à l'aide d'une couche adhésive 7. Le composant 6 chevauche la ligne de pliage 3.

Un film au moins partiellement transparent 8, également destructible en cas de tentative d'arrachement, est collé sur le volet 5 à l'aide d'une couche adhésive 9. Les dimensions du film 8 sont inférieures à celles du composant 6. Préalablement à l'utilisation de l'étiquette, un marquage de personnalisation 10 est appliqué sur le film 8.

Pour obtenir l'étiquette proprement dite, le composant holographique 6 est partiellement décollé de la feuille de support 1 entre les lignes de pliage 2 et 3, puis la partie décollée est appliquée sur le film 8 et le marquage 10. Le composant 6 est ensuite entièrement décollé de la feuille de support 1 et collé sur le film 8 à l'aide de la couche adhésive 7, ce qui a pour effet de sceller le marquage 10.

L'étiquette ainsi obtenue peut ainsi être décollée de la feuille de support 1 et collée sur un objet à marquer, à l'aide de la couche adhésive 9.

## Revendications

1. Système de marquage de sécurité pour la réalisation d'une étiquette de marquage sécurisée, comprenant une feuille support (1) telle qu'une feuille siliconée présentant deux volets (4, 5) séparés sur une première ligne de pliage (2), le premier volet (4) supportant sur la face recto un premier composant dont la face en contact avec la feuille support est revêtue d'une première couche adhésive (7),
- le deuxième volet (5) supporte sur la même face recto un deuxième composant (6') formé par un film (8) dont la face en contact avec la feuille support est revêtue d'une deuxième couche adhésive (9) et dont la face opposée porte des inscriptions de personnalisation (10),
- le premier volet comporte une deuxième ligne de pliage (3) sensiblement parallèle à la première ligne de pliage,
- le premier composant (6) et le deuxième composant (6') sont des composants holographiques obtenus par traitement d'un même film (8),
- le premier composant holographique (6) chevauche la deuxième ligne de pliage (3), et
- la première couche adhésive (7) est disjointe de la deuxième couche adhésive (9). et
- l'un au moins parmi le premier composant holographique (6) et le deuxième composant holographique (6') est au moins partiellement démétallisé.

2. Système de marquage de sécurité selon la revendication 1, dans lequel le premier composant holographique (6) est de dimensions supérieures à celles du deuxième composant holographique (6').

3. Procédé de fabrication d'un système de marquage de sécurité selon l'une quelconque des revendications précédentes,
l'étiquette comprenant une feuille support (1) telle qu'une feuille siliconée présentant deux volets (4, 5) séparés sur une première ligne de pliage (2),
- le premier volet (4) supportant sur la face recto un premier composant holographique (6),
- le deuxième volet (5) supportant sur la même face recto un deuxième composant holographique (6') et dont ladite face recto porte des inscriptions de personnalisation (10),
**Le procédé comprenant des étapes consistant à :**
- revêtir la face du premier composant holographique (6) en contact avec la feuille support (1) d'une première couche adhésive (7),
- réaliser une deuxième ligne de pliage (3) dans le premier volet (4) sensiblement parallèle à la première ligne de pliage (2), et
- disposer le composant holographique (6) de sorte à ce que celui-ci chevauche la deuxième ligne de pliage (3),
- revêtir la face du deuxième composant holographique (6') en contact avec la feuille support (1) d'une deuxième couche adhésive (9), discontinue de la première couche adhésive (7),
Et en ce que
- les deux composants holographiques (6, 6') sont obtenus par traitement d'un même film (8), dans lequel le traitement d'au moins une partie dudit film (8) destiné à former lesdits composants holographiques (6, 6') comprend les étapes consistant à :
- estamper une couche thermoformable pour former une surface holographique ;
- métalliser au moins une partie de ladite surface holographique ;
- revêtir la surface estampée et métallisée d'une couche adhésive ; et
- démétalliser partiellement ladite partie métallisée.

4. Procédé selon la revendication 3, comprenant en outre une étape consistant à dimensionner le premier composant holographique (6) de dimensions supérieures à celles du deuxième composant holographique (6').

5. Procédé de marquage de sécurité d'un objet à marquer, par une étiquette de marquage de sécurité fabriquée à partir d'un procédé de fabrication selon l'une quelconque des revendications 3 à 4, le procédé comprenant des étapes consistant à :
- décoller partiellement le premier composant holographique (6) de la feuille de support (1) au moins entre les deux lignes de pliage (2, 3),
- plier la feuille de support (1) en zigzag le long des deux lignes de pliage (2, 3),
- coller la partie décollée du premier composant holographique (6) sur le deuxième composant holographique (6'),
- achever de décoller le premier composant holographique (6) de la feuille de support (1),
- achever de coller le premier composant holographique (6) sur le deuxième composant holographique (6') et
- retirer la feuille de support (1) de manière à obtenir ladite étiquette de marquage sécurisée, et
- coller ladite étiquette sur ledit objet à marquer de façon sécurisée, à l'aide de la deuxième couche adhésive (9).

6. Procédé de marquage de sécurité selon la revendication 5, dans lequel l'objet à marquer comprend une surface transparente, l'étape de collage de l'étiquette étant mise en oeuvre sur ladite surface transparente.

## Patentansprüche

1. Sicherheitskennzeichnungssystem für die Herstellung eines gesicherten Kennzeichnungsetiketts, das eine Trägerfolie (1) umfasst, wie eine silikonisierte Folie, die zwei getrennte Klappen (4, 5) auf einer ersten Falzlinie (2) aufweist, wobei die erste Klappe (4) auf der Vorderfläche eine erste Komponente trägt, deren Fläche, die in Kontakt mit der Trägerfolie steht, mit einer ersten Klebeschicht (7) versehen ist,
- die zweite Klappe (5) trägt auf derselben Vorderfläche eine zweite Komponente (6'), die durch einen Film (8) gebildet wird, dessen Fläche, die in Kontakt mit der Trägerfolie steht, mit einer zweiten Klebeschicht (9) versehen ist und dessen gegenüberliegende Fläche personalisierte Beschriftungen (10) trägt,
- die erste Klappe umfasst eine zweite Falzlinie (3), im Wesentlichen parallel zur ersten Falzlinie,
- die erste Komponente (6) und die zweite Komponente (6') sind holografische Komponenten, hergestellt durch Bearbeitung ein und desselben Films (8),
- die erste holografische Komponente (6) überlappt die zweite Falzlinie (3) und
- die erste Klebeschicht (7) ist von der zweiten Klebeschicht (9) getrennt und
- mindestens eine unter der ersten holografischen Komponente (6) und der zweiten holografischen Komponente (6') ist mindestens zum Teil entmetallisiert.

2. Sicherheitskennzeichnungssystem nach Anspruch 1, bei dem die erste holografische Komponente (6) Abmessungen aufweist, die größer als jene der zweiter holografischen Komponente (6') sind.

3. Herstellungsverfahren für ein Sicherheitskennzeichnungssystem nach einem der vorhergehenden Ansprüche,
wobei das Etikett eine Trägerfolie (1) umfasst, wie eine silikonisierte Folie, die zwei getrennte Klappen (4, 5) auf einer ersten Falzlinie (2) aufweist,
- wobei die erste Klappe (4) auf der Vorderfläche eine erste holografische Komponente (6) trägt,
- wobei die zweite Klappe (5) auf derselben Vorderfläche eine zweite holografische Komponente (6') trägt und wobei die Vorderfläche personalisierte Beschriftungen (10) trägt,
**wobei das Verfahren die folgenden Schritte umfasst zum:**
- Versehen der Fläche der ersten holografischen Komponente (6), die in Kontakt mit der Trägerfolie (1) steht, mit einer ersten Klebeschicht (7),
- Herstellen einer zweiten Falzlinie (3) in der ersten Klappe (4) im Wesentlichen parallel zur ersten Falzlinie (2) und
- derartiges Anordnen der holografischen Komponente (6), dass diese die zweite Falzlinie (3) überlappt,
- Versehen der Fläche der zweiten holografischen Komponente (6'), die in Kontakt mit der Trägerfolie (1) steht, mit einer zweiten Klebeschicht (9), die nicht mit der ersten Klebeschicht (7) verbunden ist,
und wobei
- die zwei holografischen Komponenten (6, 6') durch Bearbeitung ein und desselben Films (8) hergestellt werden, wobei die Bearbeitung von mindestens einem Teil des Films (8), der die holografischen Komponenten (6, 6') bilden soll, die folgenden Schritte umfasst zum:
- Prägen einer thermoformbaren Schicht zur Bildung einer holografischen Oberfläche;
- Metallisieren von mindestens einem Teil der holografischen Oberfläche;
- Versehen der geprägten und metallisierten Oberfläche mit einer Klebeschicht und
- Entmetallisieren eines Teils des metallisierten Teils.

4. Verfahren nach Anspruch 3, das darüber hinaus einen Schritt umfasst zum Dimensionieren der ersten holografischen Komponente (6) mit Abmessungen, die größer sind als diejenigen der zweiten holografischen Komponente (6').

5. Verfahren zur Sicherheitskennzeichnung eines zu kennzeichnenden Objekts mithilfe eines Sicherheitskennzeichnungsetiketts, hergestellt mit einem Herstellungsverfahren nach einem der Ansprüche 3 bis 4, wobei das Verfahren die folgenden Schritte umfasst zum:
- Ablösen eines Teils der ersten holografischen Komponente (6) von der Trägerfolie (1) mindestens zwischen den zwei Falzlinien (2, 3),
- Falten der Trägerfolie (1) in Zickzackform entlang der zwei Falzlinien (2, 3),
- Kleben des abgelösten Teils der ersten holografischen Komponente (6) auf die zweite holografische Komponente (6'),
- vollständigen Ablösen der ersten holografischen Komponente (6) von der Trägerfolie (1),
- vollständigen Kleben der ersten holografischen Komponente (6) auf die zweite holografische Komponente (6') und
- derartiges Abziehen der Trägerfolie (1), dass das gesicherte Kennzeichnungsetikett erhalten wird, und
- Kleben des Etiketts auf das in sicherer Form zu kennzeichnende Objekt mithilfe der zweiten Klebeschicht (9).

6. Verfahren zur Sicherheitskennzeichnung nach Anspruch 5, bei dem das zu kennzeichnende Objekt eine transparente Oberfläche umfasst, wobei der Schritt des Aufklebens des Etiketts auf dieser transparenten Oberfläche durchgeführt wird.

## Claims

1. Security marking system for producing a secure marking label, comprising a support sheet (1) such as a siliconized sheet having two flaps (4, 5) separated on a first fold line (2), the first flap (4) supporting, on the recto face, a first component whose face in contact with the support sheet is coated with a first adhesive layer (7),
- the second flap (5) supports, on the same recto face, a second component (6') formed by a film (8) whose face in contact with the support sheet is coated with a second adhesive layer (9) and whose opposite face bears personalizing inscriptions (10),
- the first flap comprises a second fold line (3) substantially parallel to the first fold line,
- the first component (6) and the second component (6') are holographic components obtained by the treatment of one and the same film (8),
- the first holographic component (6) overlaps the second fold line (3), and
- the first adhesive layer (7) is separate from the second adhesive layer (9),
and
- at least one out of the first holographic component (6) and the second holographic component (6') is at least partially demetallized.

2. Security marking system according to Claim 1, in which the first holographic component (6) has dimensions greater than those of the second holographic component (6').

3. Method for fabricating a security marking system according to either one of the preceding claims, the label comprising a support sheet (1) such as a siliconized sheet having two flaps (4, 5) separated on a first fold line (2),
- the first flap (4) supporting, on the recto face, a first holographic component (6),
- the second flap (5) supporting, on the same recto face, a second holographic component (6') and whose said recto face bears personalizing inscriptions (10),
**the method comprising the steps of:**
- coating the face of the first holographic component (6) in contact with the support sheet (1) with a first adhesive layer (7),
- producing a second fold line (3) in the first flap (4) substantially parallel to the first fold line (2), and
- arranging the holographic component (6) in such a way that the latter overlaps the second fold line (3),
- coating the face of the second holographic component (6') in contact with the support sheet (1) with a second adhesive layer (9), separated from the first adhesive layer (7),
and in that
- the two holographic components (6, 6') are obtained by treatment of one and the same film (8),
in which the treatment of at least a part of said film (8) intended to form said holographic components (6, 6') comprises the steps of:
- stamping a thermoformable layer to form a holographic surface;
- metallizing at least a part of said holographic surface;
- coating the stamped and metallized surface with an adhesive layer; and
- partially demetallizing said metallized part.

4. Method according to Claim 3, also comprising a step consisting in dimensioning the first holographic component (6) with dimensions greater than those of the second holographic component (6').

5. Method for security marking an object to be marked, by a securing marking label fabricated from a fabrication method according to either one of Claims 3 and 4, the method comprising steps of:
- partially detaching the first holographic component (6) from the support sheet (1) at least between the two fold lines (2, 3),
- folding the support sheet (1) in a zigzag along the two fold lines (2, 3),
- gluing the detached part of the first holographic component (6) onto the second holographic component (6'),
- completing the detachment of the first holographic component (6) from the support sheet (1),
- completing the gluing of the first holographic component (6) onto the second holographic component (6') and
- removing the support sheet (1) so as to obtain said secured marking label, and
- gluing said label onto said object to be marked securely, using the second adhesive layer (9).

6. Security marking method according to Claim 5, in which the object to be marked comprises a transparent surface, the step of gluing of the label being implemented on said transparent surface.
